# NEUE EUROPÄISCHE PATENTSCHRIFT

(11) **EP 2 273 888 B2**
(45) Veröffentlichungstag und Bekanntmachung des Hinweises auf die Entscheidung über den Einspruch: **13.01.2016**
(45) Hinweis auf die Patenterteilung: 21.03.2012
(21) Anmeldenummer: 09731885.1
(22) Anmeldetag: 17.04.2009
(51) Int. Cl.: A23G 1/00, A23G 1/06, A23N 12/00

(54) **VERFAHREN UND VORRICHTUNG ZUM BEHANDELN VON KAKAOKERNEN UND KAKAOKERNTEILEN**
METHOD AND DEVICE FOR TREATING COCOA NIBS AND COCOA NIB PIECES
PROCÉDÉ ET DISPOSITIF DE TRAITEMENT DE NOIX DE CACAO ET DE MORCEAUX DE NOIX DE CACAO

(30) Priorität: 18.04.2008 DE 102008019457
(43) Veröffentlichungstag der Anmeldung: 19.01.2011
(73) Patentinhaber: PROBAT-WERKE VON GIMBORN MASCHINENFABRIK GMBH, 46446 Emmerich (DE)
(72) Erfinder: ABBING, Wim, 47551 Bedburg-Hau (DE); KOZIOROWSKI, Thomas, 45475 Mühlheim (DE)
(74) Vertreter: ter Smitten, Hans
(86) Internationale Anmeldenummer: PCT/EP2009/054609
(87) Internationale Veröffentlichungsnummer: WO 2009/127728

(56) Entgegenhaltungen:
- WO-A1-92/12643
- US-A- 1 732 896
- US-A- 2 443 620
- DEUBLEIN D: "Kakaobohnen-Röstung: Verfahren im Vergleich" ZUCKER- UND SÜSSWARENWIRTSCHAFT, Bd. 47, Nr. 1/2, 1994, Seiten 11-12,-14-17, XP008118545 ISSN: 0373-0204
- FINKEN H: "A new thermal cocoa process" FOOD MARKETING & TECHNOLOGY, Bd. 10, Nr. 2, 1996, Seite 25-27, XP008118623 ISSN: 0932-2744
- FISCHER J: "Cocoa processing - cleanng through roasting" MANUFACTURING CONFECTIONER, Bd. 89, Nr. 9, September 2009 (2009-09), XP008118532 ISSN: 0025-2573
- H. FINKEN, DIPL. ING.: 'A New Thermal Cocoa Process' FOOD MARKETING & TECHNOLOGY 1996, Seiten 25 - 26
- K. SCHIEFER: 'Verfahrenstechnik, Nahrungsmitteltechnik und Haushaltstechnik', DEUTSCHE VERLAGS-ANSTALT GMBH, STUTTGART Seiten 124 - 125
- Anlagenkonvolut zu "Tornado" von Maschinenfabrik G.W. Barth: Prospekt "Rösten und Präparieren mit der TORNADO"
- Anlagenkonvolut zu "Tornado" von Maschinenfabrik G.W. Barth: Historischer Handelsregisterauszug
- Anlagenkonvolut zu "Tornado" von Maschinenfabrik G.W. Barth: Bestellung der Unifranck Lebensmittelwerke GmbH v. 28.06.1978
- Anlagenkonvolut zu "Tornado" von Maschinenfabrik G.W. Barth: Auszug aus dem Buchfür Projektanfragen
- Anlagenkonvolut zu "Tornado" von Maschinenfabrik G.W. Barth: Ablichtung der Schemazeichnung "SKZ-7520" vom 6.10.1978
- Anlagenkonvolut zu "Tornado" von Maschinenfabrik G.W. Barth: Auszug aus Zeichnungsbuch, Schemazeichnung "SKZ-7520" v. 4.10.1978
- Landelijke organisatie beroepsopleidingen agrarische sectoren, Praktijkboek cacao & chocolade, 1997, Englische Übersetzung von Seiten 44-51

## Beschreibung

Die Erfindung bezieht sich auf ein chargenweise arbeitendes Verfahren zum Behandeln, insbesondere zum Trocknen und Rösten von Kakaokernen und Kakaokernteilen, sowie eine Vorrichtung zur Ausübung des Verfahrens.

Es ist an sich seit langem allgemein bekannt, dass es für die Behandlung von Kakao keine allgemeingültigen Arbeitsvorschriften geben kann. Die jeweils geeigneten Röstbedingungen und optimalen Behandlungsparameter hängen von mehreren Faktoren ab. Die Wesentlichen davon sind:
a.) Die Sorte oder Mischung des Ausgangsmaterials.
b.) Die Größe der Kakaobohnen.
c.) Der Fermentationsgrad der Kakaobohnen.
d.) Die Art der Trocknung nach der Fermentation.
e) Der Wassergehalt der Kakaokerne.
f.) Die Art der Vorbehandlungsschritte.
g.) Der Verwendungszweck des Endproduktes.

Die im Stand der Technik durchweg übliche Verfahrensführung bestand darin, Kakaokerne und Kakaokernteile in einer drehbaren Rösttrommel, die ausschließlich von außen mit heißen Verbrennungsabgasen beheizt wurde, zu erhitzen.

S.T. Beckett beschreibt in der Ausgabe 5 von 2007 in "Industrial Chocolate Manufacture and Use", Chapter 5.8.2:

Chargentrommelröster werden typischerweise zur Kakaokernbruchröstung verwendet. Das Prinzip dieser Röster verschiedener Hersteller ist im Allgemeinen dasselbe. Kakaokernbruch wird in die Trommel gefüllt, wo er mit Wärme von der Trommelwand geröstet wird. Die Zykluszeit beträgt normalerweise zwischen 45 und 60 Minuten.

Mit der gleichen Veröffentlichung ist zwar bekannt geworden, dass die Trocknungsbedingungen in der ersten Phase des Röstprozesses wichtig zum Erhalt einer optimalen Röstung sind, doch war es bisher verborgen geblieben, wie eine weitere Intensivierung der Aroma- und Geschmacksprofile erreichbar ist.

Bekannt ist die Heißluftführung mit einem einzigen Mengenstrom um und durch die Rösttrommel, beim Trocknen und Rösten ganzer ungeschälter Kakaobohnen. Dabei wurden aber Verbrennungsabgase von Gas- oder Ölbrennern mit dem Röstprodukt in Kontakt gebracht, wodurch die Aromen und die Geschmacksprofile des Kakaos beeinträchtigt wurden.

Die Trocknung und Röstung ganzer ungeschälter Kakaobohnen war zudem sehr zeitraubend. Die zähen und festen Samenschalen, die die Kakaokerne umhüllen, erschwerten den Feuchtigkeitsdurchgang und die Wasserdampfdestillation der ungünstigen Stoffe aus den Kakaokernen. Mit sinkendem Wassergehalt in den Kakaobohnen stieg deren Temperatur. Dabei wurden die Außenschichten der Kakaokerne in den Samenschalen wesentlich stärker erhitzt als das Kerninnere. Die Folgen davon waren Über- und Unterröstung beim Endprodukt, die Aroma- und Geschmacksbeeinträchtigungen verursachten. Die Wärmebehandlung mit steigender Temperatur und längerer Behandlungsdauer brachte es mit sich, dass die in den Kernen enthaltenen Fette stärker oxidierten und so eine unerwünschte Geschmacksveränderung entstand. Außerdem kam es zum Verlust von Kakaobutter durch Diffusion in die Schalen.

Das erfindungsgemäße Verfahren geht von der Erkenntnis aus, dass die Trocknung und Röstung von Kakaokernteilen technisch wesentlich leichter und effizienter durchführbar ist, als die Wärmebehandlung zur Trocknung und Röstung von ganzen ungeschälten Kakaobohnen.

Die Druckschrift Deublein D: "Kakaobohnen-Röstung: Verfahren im Vergleich" Zucker und Süsswarenwirtschaft , Bd. 47, Nr. ½, 1994, Seiten 11-12, -14-17, XP008118545 ISSN: 0373-0204, beschreibt verschiedene Verfahren zur Röstung von Kakaokernen oder Kakaokernteilen. U. a. wird ein Röster mit Konvektionsheizung beschrieben, wobei eine große Umluftmenge große Geschwindigkeiten um die Kakaobohnen und damit einen guten Wärmeübergang erzeugt.

WO92/12643 A1 beschreibt ein Verfahren zum Trocken und Rösten von Kaffee- und Kakaobohnen, wobei die Bohnen innerhalb einer Trommel mit Abgasen eines Brenners aufgeheizt werden, bis der gewünschte Trocknungs- und Röstgrad erreicht ist. Das Aufheizen geschieht teilweise durch die Zufuhr von Luft in das Innere der Trommel und teilweise indirekt durch eine Außenbeheizung der Trommel. Die Heißluft für die Innenbeheizung wird durch einen Wärmetauscher erhitzt.

Der Erfindung liegt die Aufgaben zugrunde, Aroma- und Geschmacksprofile bei Kakaoendprodukten zu verbessern.

Die Lösung der Aufgabe erfolgt erfindungsgemäß durch die Merkmale des Verfahrensanspruchs 1 sowie durch die Merkmale des Vorrichtungsanspruchs 10.

Beim erfindungsgemäßen Verfahren zum Trocknen und/ oder Rösten von Kakaokernteilen in einer von außen beheizbaren Trommel erfolgt zusätzlich zur Außenbeheizung der Trommel ein Durchleiten eines erhitzten Reinluftstroms, insbesondere eines erhitzten Reinluftstroms durch die Trommel. Durch diesen Reinluftstrom erfolgt eine Wärmeübertragung durch Konvektion an die Kakaokernteile.

Bevorzugt erfolgt ein chargenweises Trocken und/oder Rösten Kakaokernteile.

Es ist vorgesehen, das erfindungsgemäße Verfahren bei Kakaokernteilen anzuwenden. Hierbei kann es sich um Kakaokernbruch mit einer Korngröße von 0, 1 bis 12 mm handeln. Es handelt sich hierbei daher nicht um Bohnen, das heißt um Kakaokerne, die von einer Schale umgeben sind. Durch die fehlende Schale beim Kakaokernbruch kann der isolierende Einfluss der Schale aus dem Prozess entfernt werden. Dadurch ergibt sich die Möglichkeit, beispielsweise durch die Luftzufuhr in die Trommel einen direkten Einfluss auf den Kakaokernbruch und somit auf die Aromaentwicklung und die Geschmackswahrnehmung des späteren Kakaoendproduktes, beispielsweise Kakaopulver zu nehmen.

Durch diese Wärmebehandlung werden neue Aroma- und Geschmacksprofile im Kakao gebildet und auch eine vollkommene Abtötung aller schädlichen Keime erreicht. Weiterhin können sowohl die Trocknungsphase als auch die Röstphase verkürzt werden und somit die Rentabilität verbessert werden. Ein Anbacken des Produkts an der Trommelwand kann ferner in allen Prozessphasen sicher verhindert werden.

Es ist erfindungsgemäß ein erhitzter Reinluftstrom zu verwenden. Beispielsweise ist es möglich, dass die verwendete Reinluft auch andere Funktionen außer der Wärmeübertragung durch Konvektion erfüllt.

Das erfindungsgemäße Verfahren zum Trocknen und/ oder Rösten von Kakaokernteilen unterscheidet sich insbesondere von einem Verfahren zur Bearbeitung von Kaffeebohnen dadurch, dass bei der Bearbeitung von Kaffeebohnen keine Vorbehandlung mit einer Erhöhung der Feuchte und somit kein Alkalisierungsvorgang stattfindet. Ferner zeichnet sich die Bearbeitung von Kaffeebohnen durch eine Röstung ganzer Bohnen und nicht des Bruches sowie durch kürzere Röstzeiten aus. Ferner wird keine gereinigte, sondern normale Raumluft für den Röstprozess verwendet.

Insbesondere bei der Außenbeheizung und der Innenbeheizung der Trommel können unabhängig voneinander die Temperaturen und die Luftmengenströme nach vorwählbaren Zeit - Sollwert - Kurven gesteuert werden. Alle vier Zeit - Sollwert - Kurven sind vorzugsweise in einer programmierbaren Steuerung speicherbar und können für gleiche Produktchargen automatisch reproduziert werden. Bei dieser Verfahrensführung sind bei vorbestimmbaren Behandlungszeiten der zeitliche Verlauf des Wärmeflusses in das Innere der. Kakaokernteile sowie der zeitliche Verlauf ihrer Temperatur, steuerbar. Durch die Steuerung des Mengenstroms der heißen Reinluft, der durch die Trommel geleitet wird, ist der Wärmeübergangskoeffizient an den Kakaokernteilen variierbar und damit ist der zeitliche Verlauf des Wärmeflusses in das Innere der. Kakaokernteile nach vorbestimmbaren Profilen zu steuern. Bezüglich des Heißluftstroms, der durch die drehbare Trommel geführt wird, versteht es sich, dass dieser je nach Behandlungsphase auch ganz abgesperrt werden kann.

Im Rahmen der Erfindung sind zahlreiche verschiedene Verfahrensvarianten und -einzelheiten möglich; beispielsweise können für einen Alkalisierungsvorgang Pottaschelösungen in die Trommel eingedüst werden. Pottasche hat die chemische Formel K₂CO₃. Um Pottaschelösung herzustellen, wird Pottasche mit Wasser verdünnt in unterschiedlichen Verhältnissen von K₂CO₃ zu H₂O. Ferner können mittels Wasser oder Dampf antibakterielle Behandlungsschritte bzw. eine Sterilisation der Kakaokernteile durchgeführt werden.

Wesentliches Merkmal des erfindungsgemäßen Verfahrens ist das in Kontakt bringen der Kakaokernteile mit erhitzter Reinluft, wodurch die Trocknungszeit und die Röstzeit erheblich reduziert werden, so dass sich der Energiebedarf entsprechend verringert. Dies ist jedoch nicht der einzige Vorteil, denn es hat sich überraschend gezeigt, dass sich damit auch neue verbesserte Aroma- und Geschmacksprofile bilden lassen. Weiter kann durch die neue Prozessführung das Anbacken des Produktes an der Trommelwand selbst bei Eingangsproduktfeuchten von 30 % sicher verhindert werden.

Besonders bevorzugt ist es, dass der Reinluftstrom zur Innenbeheizung der Trommel mit einem regulierbaren Überdruck zwischen 1 und 90 mbar zugeführt wird und damit die Strömungsgeschwindigkeit der Luft, die die Kakaokernteile umspült, einstellbar ist. Dadurch ist der Wärmeübergangskoeffizient und der zeitliche Wärmefluss ins Innere der Kakaokernteile steuerbar und damit das Geschmacksprofil gezielt zu verbessern.

Insbesondere ist die Trommel drehbar und/ oder nicht perforiert.

Insbesondere haben die Kakaokernteile vor dem Trocknungsprozess eine Feuchte von 5 - 10 %. Weiterhin ist es bevorzugt, dass die Kakaokernteile vorbehandelt wurden und vor diesem Trocknungsprozess eine Feuchte von 8 - 45 % haben. Dieser Verfahrensschritt dient der Vorveredelung des Kakaokernsbruchs mit Wasser oder einer spezifischen Reaktionslösung (Pottaschelösung). Mit ihm werden unerwünschte Geruchs- und Geschmacksstoffe ausgetragen und er verkürzt die ansonsten viel Zeit und Energie beanspruchende Endveredelung.

In einer bevorzugten Ausführungsform des erfindungsgemäßen Verfahrens wird die Temperatur des Reinluftstroms, der durch die Trommel geleitet wird, in einem Bereich zwischen 80°C und 550°C frei geregelt. Insbesondere erfolgt die Regelung nach einer Sollwertprofilkurve automatisch.

Besonders bevorzugt weist der erhitzte Reinluftstrom zu Beginn des Röstprozesses eine hohe Temperatur, beispielsweise eine Temperatur zwischen 400°C und 600°C, insbesondere 550°C auf. Zu einem späteren Zeitpunkt des Röstprozesses kann diese Temperatur auf eine niedrigere Temperatur, zum Beispiel auf eine Temperatur zwischen 80°C und 250°C, insbesondere 200°C reduziert werden. Dieser Zeitpunkt kann beispielsweise nach ¾ (75%) der Gesamtröstzeit sein. Weiterhin ist es möglich, die Trommel zu Beginn des Röstprozesses mit Nenndrehzahl rotieren zu lassen und die Drehzahl während des Röstprozesses anzuheben. Das Anheben kann einmal oder mehrmals erfolgen. Die Nenndrehzahl kann hierbei um 25% und um 50% angehoben werden oder alternativ einmal direkt um 50%.

Auch kann die Trommeldrehzahl in Abhängigkeit von der Prozessphase der aktuellen Produktfeuchte und der aktuellen Produkttemperatur stufenlos in beiden Bereichen verändert werden. Unter Trommeldrehzahl wird insbesondere die Nenndrehzahl plus/minus 50 % verstanden.

Erfindungsgemäss erfolgt ein Bereitstellen eines verbrennungsgasfreien Heißluftstroms, der in einen Außenteilstrom zur Außenbeheizung der Trommel und einen Innenteilstrom zur Innenbeheizung der Trommel aufgeteilt wird. Zur Einstellung der Temperatur des Innenteilstroms wird diesem geregelt gefilterte Kaltluft zugemischt. Somit kann auf einfache Weise die Temperatur des Innenteilstroms geändert werden.

Die Erfindung betrifft ferner eine Vorrichtung zum Trocknen und/ oder Rösten von Kakaokernteilen, die zur Durchführung des bisher beschriebenen Verfahrens geeignet ist. Die Vorrichtung umfasst hierbei eine von außen beheizbare Trommel, wobei der Innenraum der Trommel mit einer Zuführleitung für erhitzte Reinluft verbindbar ist.

Die Trommel ist vorzugsweise drehbar, wobei die Zuführleitung insbesondere als feststehender Schacht ausgebildet sein kann. Erfindungsgemäß ist eine Heißlufterzeugungsvorrichtung zum Bereitstellen eines verbrennungsgasfreien Heißluftstroms vorgesehen. Durch eine Teilungsvorrichtung wird der verbrennungsgasfreie Heißluftstrom in einen Außenteilstrom zur Außenbeheizung der Trommel und in einen Innenteilstrom zur Innenbeheizung der Trommel aufgeteilt. Dies kann insbesondere durch einen entsprechend ausgebildeten Klappenmechanismus erfolgen.

Ferner ist eine Kaltluftzuführvorrichtung zum Zuführen eines geregelten Kaltluftstroms zu dem Innenteilstrom vorgesehen.

Im Folgenden wird die Erfindung anhand von Figuren näher erläutert.

Es zeigen:
Figur 1 eine Vorrichtung gemäß einer nicht erfindungsgemässen Ausführungsform und
Figur 2 eine Vorrichtung gemäß einer Ausführungsform der Erfindung.

Das Anlagenumfeld einer Trommelröstmaschine einschließlich Heißlufterzeuger, Wärmeaustauscher und Produktkühler ist in herkömmlicher Weise ausgeführt und braucht deshalb nicht im einzelnen erläutert werden.

Das Behandlungsprodukt, nämlich Kakaokernteile, wird in einer drehenden Trommel 1 umgewälzt. Der zylindrische Teil der Trommel wird von einem Heizgasstrom 2 von außen umströmt und beheizt. Ein feststehender Schacht 3 ist durch das Maschinengehäuse 4 geführt. Dadurch strömt ein nach zeitlichem Mengen- und Temperaturprofil geregelter heißer Reinluftstrom 5 von der Trommelstirnseite 6 in die Trommel 1 ein und umspült die umwälzenden und zyklisch frei fallenden Kakaokernteile. Die Abluft 7 aus der Trommel entweicht an der gegenüberliegenden Trommelstirnseite durch den Einfüllschacht 8.

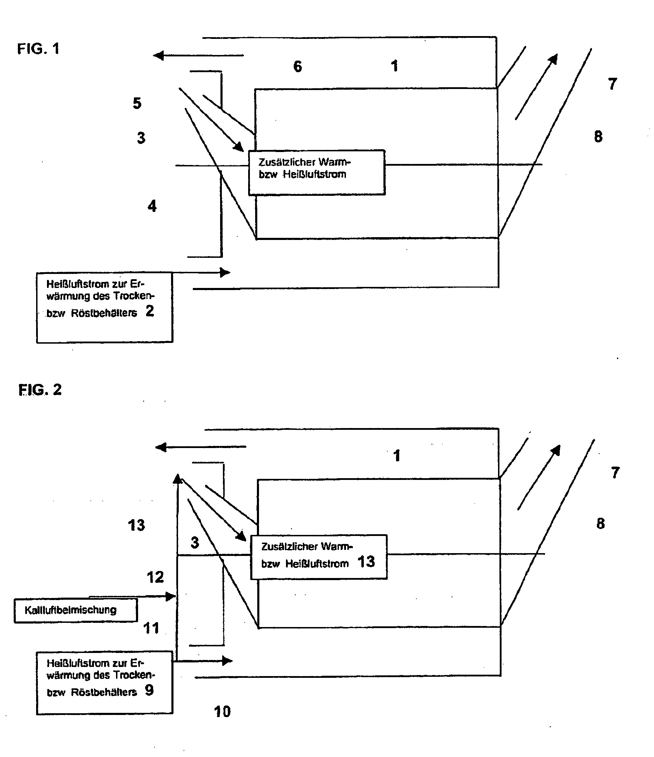

Bei der erfindungsgemässen Ausführung nach FIG. 2 werden aus einem heißen Reinluftstrom 9 zwei Teilströme gebildet. Der Teilstrom 10 dient für die Außenbeheizung der Trommel. Dem zweiten Teilstrom 11 wird entsprechend den Temperaturvorgaben ein Kaltluftstrom 12 beigemischt. Der vermischte Reinluftstrom 13 wird mengengeregelt durch Schacht 3 in die Trommel 1 geblasen.

Besonders bevorzugt werden folgende Prozessparameter verwendet, wobei eine beliebige Kombination der genannten Parameter untereinander möglich ist. Der Begriff Zulufttemperatur bezieht sich hierbei auf die Außenbeheizung der Trommel. Der Begriff Zusatzluft bezieht sich auf den erhitzten Reinluftstrom.

| | | |
|---|---|---|
| Versuch A) | Zulufttemperatur: | 550 °C |
| | Zusatzluft: | 200 °C |
| | Trommeldrehzahl: | Nenndrehzahl |
| | | nach 20 min bei 82,5 °C Produkttemp. auf 50 % über |
| | | Nenndrehzahl |
| | Produkttemperatur: | nach 31 min 100 °C |
| | | nach 35 min 110 °C |
| | Trommeldrehzahl: | nach 43 min bei 130 °C Produkttemp. auf Nenndrehzahl |
| | Dann Heißluftstrom um Trommel aus, nur Zusatzluft durch Trommel | |
| | Röstende: | bei 134 °C Produkttemperatur |
| | Produktfeuchte n. Röstur | 1,69 % |
| | | |
| Versuch B) | Zulufttemperatur: | 550 °C |
| | Zusatzluft: | 200 °C |
| | Trommeldrehzahl: | Nenndrehzahl |
| | | nach 13 min bei 109 °C Produkttemp. auf 50 % über |
| | | Nenndrehzahl |
| | Produkttemperatur: | nach 16 min 115 °C |
| | | nach 18 min 120 °C |
| | Trommeldrehzahl: | nach 20 min bei 127 °C Produkttemp. auf Nenndrehzahl |
| | Dann Heißluftstrom um Trommel aus, nur Zusatzluft durch Trommel | |
| | Röstende: | bei 132,5 °C Produkttemperatur |
| | Röstzeit: | 54 min |
| | Produktfeuchte n. Röstung: | 1,47 % |
| | | |
| Versuch C) | nicht erfindungsgemäss: | |
| | Zulufttemperatur: | 550 °C |
| | Zusatzluft: | 550 °C |
| | Trommeldrehzahl: | Nenndrehzahl |
| | | n. 25 min bei 85 °C Prod.temp. auf 20 % ü. Nenndrehzahl |
| | | n. 36 min bei 88 °C Prod.temp. auf Nenndrehzahl |
| | | n. 39 min bei 88 °C Prod.temp. auf 50 % ü. Nenndrehzahl |
| | | n. 79 min bei 135 °C Prod.temp. auf Nenndrehzahl |
| | Dann Heißluftstrom um Trommel aus, nur Zusatzluft durch Trommel | |
| | Zusatzluft: | auf 200 °C |
| | Röstende: | bei 116 °C Produkttemperatur |
| | Produktfeuchte n. Röstung: | 3,12 % |
| Versuch D) | nicht erfindungsgemäss: | |
| | Zulufttemperatur: | 550 °C |
| | Zusatzluft: | 550 °C |
| | Trommeldrehzahl: | Nenndrehzahl |
| | | n. 25 min auf 20 % über Nenndrehzahl |
| | | n. 38 min bei 93 °C Prod.temp. auf 50 % ü. Nenndrehzahl |
| | Produkttemperatur: | n. 53 min 119 °C |
| | | n. 56 min 129 °C |
| | | n. 60 min 139 °C |
| | Trommeldrehzahl: | n. 65 min bei 152 °C Produkttemp. auf Nenndrehzahl |
| | Dann Heißluftstrom um Trommel aus, nur Zusatzluft durch Trommel | |
| | Zusatzluft: | auf 200 °C |
| | Röstende: | bei 166 °C Produkttemperatur |
| | Produktfeuchte vor Kühlung: | 1,05 % |
| | Produktfeuchte n. Kühlung: | 0,78 % |
| Versuch E) | nicht erfindungsgemäss: | |
| | Zulufttemperatur: | 550 °C |
| | Zusatzluft: | 550 °C |
| | Trommeldrehzahl: | Nenndrehzahl |
| | | nach 25 min auf 20 % über Nenndrehzahl |
| | | nach 38 min auf 50 % über Nenndrehzahl |
| | | nach 57 min bei 142 °C Produkttemp. auf Nenndrehzahl |
| | nach 59 min: | bei 150 °C Produkttemp.: Heißluftstrom um Trommel aus, nur Zusatzluft durch Trommel |
| | | Zusatzluft auf 200 °C |
| | Röstende: | bei 145 °C Produkttemperatur |
| | Produktfeuchte n. Röstung: | 1,28 % |
| Versuch F) | nicht erfindungsgemäss: | |
| | Zulufttemperatur: | 550 °C |
| | Zusatzluft: | 550 °C |
| | Trommeldrehzahl: | Nenndrehzahl |
| | | n. 25 min bei 85,5 °C Prod.temp. auf 20 % ü. Nenndrehzahl |
| | | n. 38 min bei 88 °C Prod.temp. auf 50 % ü. Nenndrehzahl |
| | Produkttemperatur: | nach 50 min bei 90 °C |
| | | nach 60 min bei 92 °C |
| | | nach 70 min bei 109 °C |
| | | nach 75 min bei 122 °C |
| | Trommeldrehzahl: | nach 85 min bei 140 °C Produkttemp. auf Nenndrehzahl |
| | nach 86 min: | bei 145 °C Produkttemp. |
| | | Heißluftstrom um Trommel auf 500 °C |
| | | |
| | Zusatzluft: | auf 200 °C |
| | Trommeldrehzahl: | auf Nenndrehzahl |
| | nach 94 min: | bei 155 °C Produkttemp.: Heißluftstrom um Trommel aus, nur Zusatzluft durch Trommel |
| | Röstende: | bei 162 °C Produkttemperatur |
| | Produktfeuchte n. Röstung: | 0,9 % |
| | | |
| Versuch G) | Zulufttemperatur: | 550 °C |
| | Zusatzluft: | 98 °C |
| | Trommeldrehzahl: | Nenndrehzahl |
| | | n. 25 min bei 68 °C Prod.temp. auf 20 % ü. Nenndrehzahl |
| | | n. 38 min bei 69,5 °C Prod.temp. auf 50 % ü. Nenndrehzahl |
| | | n. 85 min bei 140 °C Produkttemp. auf Nenndrehzahl |
| | Produkttemperatur: | nach 45 min bei 72 °C |
| | | nach 55 min bei 79,5 °C |
| | | nach 65 min bei 100 °C |
| | | nach 75 min bei 122 °C |
| | nach 87 min: | bei 145 °C Produkttemp.: Heißluftstrom um Trommel aus, nur Zusatzluft durch Trommel |
| | Röstende: | bei 150 °C Produkttemperatur |
| | Produktfeuchte n. Röstung: | 1,72 % |
| Versuch H) | Zulufttemperatur: | 550 °C |
| | Zusatzluft: | 98 °C |
| | Trommeldrehzahl: | Nenndrehzahl |
| | | n. 25 min bei 69 °C Prod.temp. auf 20 % ü. Nenndrehzahl |
| | | n. 38 min bei 70,5 °C Prod.temp. auf 50 % ü. Nenndrehzahl |
| | | n. 78 min bei 123,5 °C Produkttemp. auf Nenndrehzahl |
| | Produkttemperatur: | nach 45 min bei 71,5 °C |
| | | nach 52 min bei 76 °C |
| | | Zusatzluft durch die Trommel aus |
| | | nach 55 min bei 84 °C |
| | | nach 60 min bei 93 °C |
| | | nach 65 min bei 100 °C |
| | | nach 70 min bei 108 °C |
| | | nach 75 min bei 118 °C |
| | | nach 85 min bei 136 °C |
| | | nach 87 min bei 140 °C |
| | nach 89 min: | bei 145 °C Produkttemp.: Heißluftstrom um Trommel aus, nur Zusatzluft durch Trommel |
| | Röstende: | bei 150 °C Produkttemperatur |
| | Produktfeuchte n. Röstung: | 1,59 % |

## Patentansprüche

1. Verfahren zum Trocknen und/oder Rösten von Kakaokernteilen in einer von außen beheizbaren Trommel (1),
**dadurch gekennzeichnet, dass**
zusätzlich zur Außenbeheizung der Trommel (1) für eine Wärmeübertragung durch Konvektion ein erhitzter Reinluftstrom (5) durch die Trommel geleitet wird, wobei zusätzlich ein verbrennungsgasfreier Heißluftstrom (9) bereitgestellt wird, der in einen Außenteilstrom (10) zur Außenbeheizung der Trommel (1) und einen Innenteilstrom (11) zur Innenbeheizung der Trommel (1) aufgeteilt wird, wobei insbesondere dem Innenteilstrom (11) für die Innenbeheizung zur Einstellung seiner Temperatur geregelt gefilterte Kaltluft (12) zugemischt wird.

2. Verfahren nach Anspruch 1, **dadurch gekennzeichnet, dass** die Trommel (1) drehbar und insbesondere nicht perforiert ist und ferner insbesondere von außen mit Heißluft (2) beheizt wird.

3. Verfahren nach einem der Ansprüche 1 oder 2, **dadurch gekennzeichnet, dass** die Temperatur und/oder der Mengenstrom des erhitzten Reinluftstroms (5) über die Zeit gesteuert wird, wobei insbesondere die Kakaokernteile vor dem Trocknungsprozess eine Feuchte von 5 bis 10 % haben.

4. Verfahren nach einem der Ansprüche 1 bis 3, **dadurch gekennzeichnet, dass** die Kakaokerne oder Kakaokernteile vorbehandelt wurden und vor dem Trocknungsprozess eine Feuchte von 8 bis 45 % haben.

5. Verfahren nach einem der Ansprüche 1 bis 4, **dadurch gekennzeichnet, dass** der durch die Trommel (1) geleitete erhitzte Reinluftstrom (5) mit einem nach einem Profil regelbaren Überdruck zwischen 1 und 90 mbar zugeführt wird und insbesondere die Temperatur des Reinluftstroms (5), der durch die Trommel (1) geleitet wird, in einem Bereich zwischen 80°C und 550°C frei regelbar und insbesondere nach Sollwert-Profilkurve automatisch regelbar ist.

6. Verfahren nach Anspruch 1, **dadurch gekennzeichnet, dass** der durch die Trommel (1) geleitete erhitzte Reinluftstrom (5) abhängig von der Prozessphase, der aktuellen Produkttemperatur und der aktuellen Produktfeuchte abgesperrt werden kann und insbesondere die Trommeldrehzahl in Abhängigkeit von der Prozessphase, der aktuellen Produktfeuchte und der aktuellen Produkttemperatur stufenlos in weiteren Bereichen verändert wird.

7. Verfahren nach einem der Ansprüche 1 bis 6, **dadurch gekennzeichnet, dass** der Reinluftstrom (5) zu Beginn des Röstverfahrens eine Temperatur von 400°C bis 600°C, insbesondere 550°C hat und während des Röstverfahrens eine Reduzierung dieser Temperatur auf eine Temperatur zwischen 80°C und 250°C, insbesondere auf 200°C erfolgt.

8. Verfahren nach Anspruch 7, **dadurch gekennzeichnet, dass** die Reduzierung der Temperatur des Reinluftstroms nach Ablauf von 3/4 der Gesamtröstzeit erfolgt.

9. Verfahren nach einem der Ansprüche 1 bis 8, **dadurch gekennzeichnet, dass** die Trommel (1) zu Beginn des Röstverfahrens mit Nenndrehzahl rotiert wird und in einem oder mehreren Schritten während des Röstverfahrens die Trommeldrehzahl um 25 % und/oder 50 % über die Nenndrehzahl angehoben wird.

10. Vorrichtung zum Trocknen und/oder Rösten von Kakaokernteilen zur Durchführung des Verfahrens nach einem der Ansprüche 1 bis 9 mit einer von außen beheizbaren Trommel (1), wobei
der Innenraum der Trommel (1) mit einer Zuführleitung (3) für erhitzte Reinluft (5) verbindbar ist, **gekennzeichnet durch** eine Heißlufterzeugungsvorrichtung zum Bereitstellen eines verbrennungsgasfreien Heißluftstroms (9), wobei eine Teilungsvorrichtung zum Aufteilen des verbrennungsgasfreien Heißluftstroms (9) in einen Außenteilstrom (10) zur Außenbeheizung der Trommel (1) und in einem Innenteilstrom (11) zur Innenbeheizung der Trommel (1) und wobei eine Kaltluftzuführvorrichtung zum Zuführen eines geregelten Kaltluftstromes (12) zu dem Innenteilstrom (11) vorgesehen sind.

11. Vorrichtung nach Anspruch 10, **dadurch gekennzeichnet, dass** die Trommel (1) drehbar ist.

12. Vorrichtung nach Anspruch 10 oder 11, **dadurch gekennzeichnet, dass** die Zuführleitung (3) als feststehender Schacht ausgebildet ist.

## Claims

1. Method for drying and/or roasting cocoa nib pieces in an externally heatable drum (1),
**characterized in that**
in addition to the external heating of the drum (1), a heated pure air flow (5) is passed through said drum for heat transmission by convection, wherein in addition a combustion-gas-free hot air flow (9) is provided which is divided into an external partial flow (10) for external heating of the drum (1) and an internal partial flow (11) for internal heating of the drum (1), wherein said internal partial flow (11) for internal heating is admixed with controlled, filtered cold air (12) for adjustment of the temperature of the internal partial flow.

2. The method according to claim 1, **characterized in that** the drum (1) is rotatable and particularly is not perforated and further is heated, particularly externally, by hot air (2).

3. The method according to any one of claims 1 or 2, **characterized in that** the temperature and/or the mass flow of the heated pure gas flow (5) are controlled over time wherein, particularly, the cocoa nib pieces prior to the drying process have a moisture of 5 to 10%.

4. The method according to any one of claims 1 or 3, **characterized in that** the cocoa nibs or cocoa nib pieces have been pretreated and prior to the drying process have a moisture of 8 to 45%.

5. The method according to any one of claims 1 or 4, **characterized in that** the heated pure gas flow (5) passed through the drum (1) is supplied at an overpressure ranging from 1 to 90 mbar and is controllable according to a profile and that particularly the temperature of the pure gas flow (5) passed through the drum (1) is freely controllable in a range from 80°C to 550°C and particularly is automatically controllable according to a desired value - profile curve.

6. The method according to claim 1, **characterized in that** the heated pure gas flow (5) passed through the drum (1) can be shut off in dependence on the process phase, the current product temperature and the current product moisture and that, particularly, the rotational speed of the drum is steplessly varied in larger ranges in dependence on the process phase, the current product moisture and the current product temperature.

7. The method according to any one of claims 1 or 6, **characterized in that** the pure air flow (5) at the start of the roasting process has a temperature ranging from 400°C to 600°C, particularly 550°C, and that, during the roasting process, said temperature is reduced to a temperature ranging from 80°C to 250°, particularly to 200°C.

8. The method according to claim 7, **characterized in that** said reduction of the temperature of the pure air flow is performed after 3/4 of the total roasting time.

9. The method according to any one of claims 1 to 8, **characterized in that** the drum (1) at the start of the roasting process is rotated at a nominal rotational speed and that, during the roasting process, the rotational speed of the drum is increased in one or a plurality of steps by 25% and/or 50% above the nominal rotational speed.

10. A device for drying and/or roasting cocoa nib pieces for performing the method according to any one of claims 1 to 9, comprising an externally heatable drum (1), wherein the interior of the drum (1) is connectible to a feed conduit (3) for heated pure gas (5), **characterized by** a hot-air generating device for providing a combustion-gas-free hot air flow (9), wherein a separating device for separating the combustion-gas-free hot air flow (9) into an external partial flow (10) for external heating of the drum (1) and an internal partial flow (11) for internal heating of the drum (1) and a cold-air feed device for supply of a cold air flow (12), particularly a controlled cold air flow, to said internal partial flow (11), are provided.

11. The device according to claim 10, **characterized in that** said drum (1) is rotatable.

12. The device according to claim 10 or 11, **characterized in that** said feed conduit (3) is formed as a fixed shaft.

## Revendications

1. Procédé de séchage et/ou de torréfaction de parties de noix de cacao dans un tambour (1) pouvant être chauffé de l'extérieur,
**caractérisé en ce que**,
en plus du chauffage extérieur du tambour (1), pour une transmission de chaleur par convection, un flux d'air purifié chauffé (5) est conduit à travers le tambour (1), et l'on met en oeuvre également un flux d'air très chaud (9) exempt de gaz de combustion, qui est divisé en un flux partiel extérieur (10) pour le chauffage extérieur du tambour (1), et en un flux partiel intérieur (11) pour le chauffage intérieur du tambour (1), de l'air froid (12) filtré étant mélangé de façon réglée au flux partiel intérieur (11) destiné au chauffage intérieur afin de régler sa température.

2. Procédé selon la revendication 1, **caractérisé en ce que** le tambour (1) est rotatif et, en particulier, n'est pas perforé, et est en outre en particulier chauffé de l'extérieur avec de l'air très chaud (2).

3. Procédé selon l'une des revendications 1 ou 2, **caractérisé en ce que** la température et/ou le flux massique du flux de gaz purifié (5) chauffé est commandé dans le temps, les parties de noix de cacao présentant en particulier avant le processus de séchage une humidité de 5 à 10 %.

4. Procédé selon l'une des revendications 1 à 3, **caractérisé en ce que** les noix de cacao ou les parties de noix de cacao ont été prétraitées et présentent avant le processus de séchage une humidité de 8 à 45 %.

5. Procédé selon l'une des revendications 1 à 4, **caractérisé en ce que** le flux de gaz purifié (5) chauffé conduit à travers le tambour (1) est amené avec une surpression, réglable selon un profil, entre 1 et 90 mbar, et en particulier la température du flux de gaz purifié (5) qui est conduit à travers le tambour (1) est librement réglable dans une plage de 80 °C à 550 °C, et en particulier est réglable automatiquement selon une courbe de profil - valeur de consigne.

6. Procédé selon la revendication 1, **caractérisé en ce que** le flux d'air purifié (5) chauffé conduit à travers le tambour (1) peut être bloqué en fonction de la phase de processus, de la température actuelle du produit et de l'humidité actuelle du produit, et **en ce que** en particulier la vitesse de rotation du tambour est modifiée de façon continue vers d'autres plages en fonction de la phase de processus, de l'humidité actuelle du produit et de la température actuelle du produit.

7. Procédé selon l'une des revendications 1 à 6, **caractérisé en ce que** le flux d'air purifié (5) présente, au début du procédé de torréfaction, une température de 400 °C à 600 °C, en particulier de 550 °C, et **en ce que**, pendant le procédé de torréfaction, il intervient une réduction de cette température à une température comprise entre 80 °C et 250 °C, en particulier une réduction à 200 °C.

8. Procédé selon la revendication 7, **caractérisé en ce que** la réduction de la température du flux d'air purifié s'effectue à l'expiration des ¾ de la durée totale de torréfaction.

9. Procédé selon l'une des revendications 1 à 8, **caractérisé en ce que**, au début du procédé de torréfaction, le tambour (1) est mis en rotation avec une vitesse de rotation nominale, et ce que, en une ou plusieurs étapes pendant le procédé de torréfaction, la vitesse de rotation nominale est amenée à 25 % et/ou à 50 % au-dessus de la vitesse de rotation nominale.

10. Dispositif de séchage et/ou de torréfaction de parties de noix de cacao pour la réalisation du procédé selon l'une des revendications 1 à 9, avec un tambour (1) pouvant être chauffé de l'extérieur, l'espace intérieur du tambour (1) pouvant être raccordé à une conduite d'amenée (3) du gaz purifié (5) chauffé, **caractérisé par** un dispositif de production d'air très chaud pour la mise à disposition d'un flux d'air très chaud (9) exempt de gaz de combustion, et par un dispositif diviseur pour la division du flux d'air très chaud (9) exempt de gaz de combustion en un flux partiel extérieur (10) pour le chauffage extérieur du tambour (1) et en un flux partiel intérieur (11) pour le chauffage intérieur du tambour (1), et par un dispositif d'amenée d'air froid pour l'amenée en particulier d'un flux d'air froid (12) réglé en direction du flux partiel intérieur (11).

11. Dispositif selon la revendication 10, **caractérisé en ce que** le tambour (1) est rotatif.

12. Dispositif selon la revendication 10 ou 11, **caractérisé en ce que** la conduite d'amenée (3) est constituée en tant que puits fixe.
